# EUROPEAN PATENT SPECIFICATION

(11) **EP 2 066 097 B1**
(45) Date of publication and mention of the grant of the patent: **06.04.2016**
(21) Application number: 07023145.1
(22) Date of filing: 29.11.2007
(51) Int. Cl.: H04L 29/08, H04L 12/24, H04L 12/26

(54) **Scenario tracking in a network**
Szenarienverfolgung in einem Netzwerk
Suivi de scénarios dans un réseau

(43) Date of publication of application: 03.06.2009
(73) Proprietor: Nokia Solutions and Networks Oy, 02610 Espoo (FI)
(72) Inventor: Sonntag, Markus, 1040 Wien (AT); Valentin, Christoph, 1150 Wien (AT)
(74) Representative: Borgström, Markus

(56) References cited:
- US-A1- 2004 264 481
- US-A1- 2006 047 947
- FENG CAO ET AL: "Providing Secure End-to-End Session Tracking in Distributed Multi-Protocol Environments" COMPUTER AND INFORMATION TECHNOLOGY, 2006. CIT '06. THE SIXTH IEE E INTERNATIONAL CONFERENCE ON, IEEE, PI, 1 September 2006 (2006-09-01), pages 155-155, XP031021739 ISBN: 978-0-7695-2687-4
- WAHL INFORMED CONTROL INC M: "LDAP Session Tracking Control; draft-wahl-ldap-session-03.txt" IETF STANDARD-WORKING-DRAFT, INTERNET ENGINEERING TASK FORCE, IETF, CH, no. 3, 9 May 2007 (2007-05-09), XP015050539 ISSN: 0000-0004

## Description

### FIELD OF THE INVENTION

The present invention relates to a method and a system for scenario tracking in a network including a plurality of network elements. Further, the present invention relates to such a network element, and finally the present invention relates to a signal of a message for forwarding scenario tracking data in a network.

### BACKGROUND OF THE INVENTION

Even in nowadays modern networks, a lot of different activities have to be undertaken in terms of serviceability to collect complex error symptoms from a huge telecommunication network, especially, in case of suspicious or erroneous call scenarios. Today, most network elements already provide some but in detail only network element specific means of scenario-traceability. In most cases, those means can only be applied to one local network element and do not have a spreading effect to other involved network elements.

A collection of scenario related trace data within a whole network (over many or all involved network elements) is not yet easily possible and remains to be a tedious and error-prone task to be manually executed per network element. In most cases, even an automated collection of all locally collected tracking data cannot be taken for granted and must be achieved in a more or less manual way. Tracking data correlation for all involved network elements and their entire collected scenario tracking data is still difficult, especially in those cases where in parallel more than one scenario-tracking activity may be in progress. Scenario tracking very often is restricted by separated local area networks or suffers from performance intensive brute force scan and trace approaches.

In the prior art, the aforementioned problem is currently tried to be solved by tracing each network element separately, by activating each network element and setting filtering on each network element, whereas no automatic activation through the scenario flows itself.

US-A-2006047947 describes a method for reliable end-to-end messaging in which tracking and acknowledgement information are contained in an electronic message that is visible to layers above the transport layer, thereby being independent of what transport protocols, and whether different transport protocols, are used to communicate between the two end points.

Feng Cao; Petre Dini; Providing Secure End-to-End Session Tracking in Distributed Multi-Protocol Enviroriments (Computer and Information Technology, 2006; 2006-09-01) describes scalable systematic solution for providing end-to-end session tracking in distributed multiple-protocol environments.

US-A-2004264481 discloses a method for network load balancing with traffic routing. The method includes receiving a packet requesting a new connection at a forwarding component; sending the packet from the forwarding component to a classifying component; selecting, by the classifying component, a route for the new connection; and plumbing, by the classifying component, the route for the new connection by causing a new entry to be added in a local routing table of the forwarding component.

Many network devices, application servers, and middleware components of a enterprise software infrastructure generate some form of session tracking identifiers, which are useful when analyzing activity and accounting logs to group activity relating to a particular session. "LDAP Session Tracking Control; draft-wahl-Idap-session-03.txt" is an IETF standard working darft. It discusses how Lightweight Directory Access Protocol version 3 (LDAP) clients can include session tracking identifiers with their LDAP requests. This information is provided through controls in the requests the clients send to LDAP servers. The LDAP server receiving these controls can include the session tracking identifiers in the log messages it writes, enabling LDAP requests in the LDAP server's logs to be correlated with activity in logs of other components in the infrastructure. The control also enables session tracking information to be generated by LDAP servers and returned to clients and other servers. Three formats of session tracking identifiers are defined in this document.

### SUMMARY OF SOME EXAMPLARY EMBODIMENTS

An object of the present invention is to improve the situation of scenario tracking. In order to achieve the aforementioned and further objects, according to a first aspect, there is provided a method for scenario tracking in a network including a plurality of network elements, wherein a scenario is originated from just one initial message or signal and comprises many further subsequent messages and signals resulting from responding and/or forwarding the messages to other network elements or network functions, comprising the steps of
- creating scenario tracking data including at least an information about a predetermined scenario to be tracked, and
- forwarding said scenario tracking data via a message from one of the network elements to at least one of the other network elements,
- wherein for said message a protocol is used which allows adding a set of arbitrary optional parameters to protocol messages to be exchanged, and
- wherein as optional parameters said scenario tracking data are added to the exchange protocol messages so that said scenario tracking data define part of said protocol.

According to a second aspect, there is provided a system for scenario tracking in a network including a plurality of network elements, comprising a creator for creating scenario tracking data including at least an information about a predetermined scenario to be tracked, and a transmitter for forwarding said scenario tracking data via a message from one of the network elements to at least one of the other network elements, wherein the protocol of said message allows adding a set of arbitrary optional parameters to protocol messages to be exchanged, and as optional parameters said scenario tracking data included in the exchange protocol messages so that said scenario tracking data define part of said protocol.

According to a third aspect, there is provided a network element in a network including a plurality of network elements, for scenario tracking, comprises a creator for creating scenario tracking data including at least an information about a predetermined scenario to be tracked, and a transmitter for forwarding said scenario tracking data via a message to at least one of the other network elements, wherein the protocol of said message allows adding a set of arbitrary optional parameters to protocol messages to be exchanged, and as optional parameters said scenario tracking data included in the exchange protocol messages so that said scenario tracking data define part of said protocol.

In accordance with a fourth aspect, there is provided a signal of a message for forwarding a scenario tracking data including at least an information about a predetermined scenario to be tracked in a network including a plurality of network elements, comprising a protocol which allows adding a set of arbitrary optional parameters to protocol messages to be exchanged, wherein as optional parameters said scenario tracking data are included so that said scenario tracking data define part of said protocol.

Further embodiments and modifications are defined in the dependent claims.

A basic idea is to create a unique tracking session per certain tracking scenario represented by a unique scenario tracking identity. This scenario tracking identity plus additional information will be passed via messaging (directly or indirectly) to any other involved network elements and will automatically be included or added to any other further related message of that certain scenario.

Due to the concept of the present invention, an initial marking of the scenario on real client side is not necessary; this can be achieved by any network element being involved in a certain scenario, which is typically the first border network element. However, in principle also the client element can start tracking (if any operator's border network elements allow this from their policies).

The collection logic proposed by the approach of the invention is network element driven so that each network element can actively transfer collected tracking tickets at any time to a proposed collection address. No special command interface is needed to configuring that, and no obligatory pulling of tickets is needed, either. Pushing of tickets is possible. But pulling of tickets may be possible wherein a monitor function is polling each network element, time after time, whether some new tracking tickets have been created.

The present invention also addresses the retransmission problem by providing a newly defined special unique scenario-tracking message identity which helps to correctly distinguish even identical retransmitted messages within a scenario.

Instead of the definition of a message token as used in the prior art to propagate tracking to other nodes, according to the invention this is preferably defined by introducing a new SIP header. The present invention allows the possibility that, even without receiving a token as part of a scenario, a traceful message can switch on tracking again under certain given circumstances, with the advantage that, when a network element does not support a correct spreading of tracking activation, the tracking can be continued at least on those network elements which already know from traceful internal states about the current tracking scenario being activated.

The invention addresses the serviceability problem concerning scenario tracking deficiencies and tries to improve the current situation by making use of some basic protocol features of modern telecommunication protocols, especially SIP {session initiation protocol) or optionally DIAMETER protocols. These protocols are so-called application level protocols which are used to established multimedia sessions or calls in a packet switched environment.

These modern protocols allow not only setting simple trace-flags in messages which still make it hard to correlate tracking data created by different network elements, but also help to properly propagate sophisticated scenario-tracking related information to other network elements. The mechanism of the present invention dramatically improves tracking and traceability over a whole SIP network.

The invention especially improves the possibility to collect scenario tracking data over the whole network by initiating tracking of the whole network protocol scenario via triggering on just one network element and collecting any scenario-related tracking information to a scenario-specific collection address.

Using protocol language features and capabilities of a modern flexible protocol in the proposed way can improve the scenario-traceability of a network. According to a preferred embodiment of the invention it is made use of a header carrying scenario-tracking information like related IDs (identities) and other data which allow correlation and collection of messages and/or activities for a specific tracking scenario over many different involved networks, network elements and network functions.

So, no extra tracking messages are exchanged between the involved network elements when tracking is done, but only the normally exchanged messages are just enhanced with those optional message headers or parameters.

A preferred embodiment of the invention can be defined as part of a common tracking/traceability/serviceability standard SIP/DIAMETER RFC (request for comments) which, when implemented by the majority of SIP communication technology providers, a powerful tracking functionality over heterogeneous vendor networks can be achieved.

The mechanism of the present invention can be realized with means of SIP in a 3GPP IMS network. However, very similar to a SIP based solution, this can be done with any other similarly flexible protocols (like DIAMETER) which at least allow adding a special set of arbitrary optional parameters to the exchanged protocol messages. Even scenario-tracking inter-working between different protocol families is possible. This, by the way, solely lies in the responsibility and capabilities of the specific network function implementing more than one high level protocol stacks (e.g. B2BUAs (back-to-back user agents), gateways, gateway controllers).

The basic principle of the invention assumes that any network element supporting traceability on the protocol layer obeys the key tracking rules proposed in this invention. These rules depend on the actual network position and role.

Implementation on a detailed SIP level in a 3GPP (3^{rd} generation partnership project) IMS (internet protocol multimedia subsystem) or SIP based network with clear definition of tracking related headers is now available. Also a detailed definition of the behaviour of each network element is stated. Especially, the behaviour for network border entities seems crucial and is now possible.

Moreover, any relevant scenario-specific activities and executed functions and any relevant messaging can be recorded into scenario tracking tickets; later, these tickets are passed to the addressed scenario ticket collection function network element which can post-process and monitor the results of a tracked scenario.

In the context of the present invention, it is noted that "network element" means any kind of network element like e.g. node, a base station and a mobile station, and further means any kind of network element function.

### BRIEF DESCRIPTION OF THE DRAWING

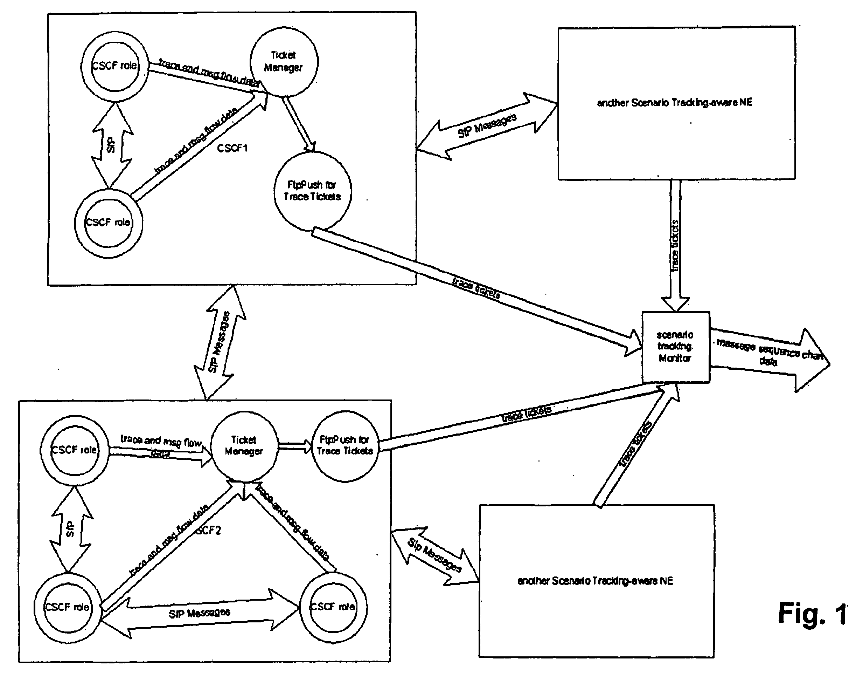

The present invention will now be described based on embodiments with reference to the accompanying drawing in which
- Figure 1: shows a schematic block and flow diagram of an IMS (internet protocol multimedia subsystem) tracking system according to an embodiment.

### DESCRIPTION OF THE PREFERRED EMBODIMENT

In networks, a STF (scenario tracking function) is provided for identifying a scenario-traceful message. This is done according to a configuration information retrieved via a network specific operation and maintenance (OAM) configuration, a direct operator specification, network element specific detection algorithms and/or any other configuration functions. Tracking is instrumented and organized via a network element specific or network specific OAM interface which sets the tracking modalities as schematically shown in figure 1.

A full scenario comprises all flow items of the whole scenario (e.g. including B2BUA legs). A partial scenario comprises only those items up to the termination of a specific termination point (just one leg of a B2). Full or partial may be optional scenario tracking parameters.

A useful set of scenario tracking preconditions in SIP may comprise a specific subscriber identity, a SIP-INVITE method and/or further preconditions as described via IMS-iFc mechanism used for application server control in S-CSCF (serving call state control function).

Virtually, any message may make up a new unique traceful scenario. With respect thereto, it is noted that messages which belong to a traceful scenario are called scenario traceful messages.

The message which initially creates a new traceful scenario is called the initial scenario-traceful message. The initial scenario-traceful message is responsible for that a scenario-tracefulness of a scenario was first recognized. At detection of an initial scenario-traceful message, the STF creates a new tracing scenario session and as part of that a new unique scenario identity, which is then propagated along with other useful information via a SIP scenario-tracking header.

The scenario-traceful message is a message which already propagates the tracking information. The internal network element's functionality can detect either initial scenario-tracefulness or implicit scenario-tracefulness because of already existing stored scenario-stateful information of the network element function itself (e.g. through a local call context or data base information).

A traceful scenario comprises all activities, e.g. any messages received or sent on all network elements which are aware of scenario-tracefulness and comprise information about handling a specific compound signaling sequence. Typically, a certain scenario is originated from just one initial message or signal (e.g. a SIP-INVITE) and comprises many further subsequent messages and signals resulting from responding and/or forwarding the messages to other network elements or network functions, e.g. a SIP call session set-up for a certain traceful subscriber. So, the scenario-tracefulness aware network elements comprise all network elements which obey the described rules to track a traceful scenario.

As a consequence, not only in the actual network element or in the current local network element's ISTDF (initial scenario tracking detection function of the STF) function a traceful scenario can be understood and handled. Scenario tracefulness can propagate to any other network element or network function which also participates in the traceful scenario.

In order to propagate scenario tracefulness to other network elements, the STF has to do following tasks:
- For each traceful scenario the STF creates a network-wide unique scenario-ID (identity).
- The STF activates tracking for a traceful scenario in the local network function/element and also may update internal stateful contexts and transaction stateful data so that it knows about the sceriano tracking.
- The STF puts the information about tracefulness of the scenario into a new SIP header "Tracking", which must contain:
   o the unique scenario tracking ID as just created before;
   o the address of the STCF (scenario tracking collection function) which is just a URL (universal resource locator) where tracking tickets for this certain scenario shall be sent to; if the address of the STCF is constantly known to all involved network elements, this parameter may be omitted;
   o a unique message ID which is set by each involved hop for each new traceful message sent out, wherein even a retransmitted message will receive a new unique message ID;
   o (optional) tracking flags to unify tracking handling behavior over all network elements.

If all conditions are met, a tracing agent activates the tracking by actively adding the information (setting a marker to the transaction). At this point, a special ID is defined as scenario tracking ID. In combination with a predefined URL this can be used to uniquely identify a target location for pushing the resulting scenario items to.

By adding a new SIP tracking header it is indicated that tracking of the scenario shall be continued also on the next hop(s). The scenario tracking header includes
- a scenario tracking ID generated by a scenario tracking originator be a network element,
- a tracking ticket delivery address,
- several tracking option parameters which influence the way of tracking, e.g. depth ("full", "partial") and tracking of user plane ("yes"/"no") or by specifying tracking time-intervals, tracking periods or other tracking filtering aspects which help to focus the tracked information to the known needs of the tracking session.
- a scenario message ID which should be updated even for retransmissions so that (network element to network element related) retransmissions of the same message will therefore have different scenario tracking message IDs; the reason for this is to be able to correlate exactly sent and received messages with each other even for retransmissions and complex race condition situations.

The listing as given in Table 1 is a first example for a scenario-traceful SIP message showing an excerpt with some headers shortened or removed and the body removed.

**Table 1**

| |
|---|
| *INVITE sip:ITSE000102_B@home31.ims.integ SIP*/*2.0* |
| *Via: SIPl2.0*/*TCP 10.10.10.139:5081;branch=z9hG4bK9e3beb1efa8a2f2689cd7229b2b6dab3;Iskpmc=102* |
| *Route: <sip:scscf.home31.ims.integ:5090;lskpmc=S01;Ir>* |
| *From: <sip:ITSE000102_A@home31.ims.integ>;tag=INVITE_FROM_TAG_ITSE000102_A* |
| *To: <sip:ITSE000102_B@home31.ims.integ>* |
| *Contact: <sip:ITSE000102_A@12.8.8.29:30501>* |
| *Call-ID: ITSE000102_A-3047834023@12.8.8.29* |
| *CSeq: 4 INVITE* |
| *Max-Forwards: 65* |
| *Content-Type: applicationlsdp* |
| *Content-Length: 150* |
| *P-Asserted-Identity: <sip:ITSE000102_A@home31.ims.integ>* |
| *P-Charging-Vector: icid-value="00030028@pcscf.home31.ims.integ"* |
| *Tracking: 128937469182sc1;monitor=ftp:llmonitor.network.xyz;;mode=full;msgid=INVITElcscf1@home31.ims.integ*/*1* |

**Table 2**

| |
|---|
| *SIPl2.0 200 OK* |
| *Record-Route: <sip:pcscf.home31.ims.integ:5070;routing_id=pcsc_b_side;Iskpmc=P02*/*r>* |
| *Via: SIP*/*2.0*/*UDP 12.8.8.29:30501;branch*=*z9hG4bKjxhfthvy* |
| *From: <sip:ITSE000102_A@home31.ims.integ>;tag=INVITE_FROM_TAG_ITSE000102_A* |
| *To: <sip:ITSE000102_B@home31.ims.integ>;tag=INVITE_TO_TAG_ITSE000102_B* |
| *Contact: <sip:ITSE000102_B@12.8.8.108:30502>* |
| *Call-ID: ITSE000102_A-3047834023@12.8.8.29* |
| *CSeq: 4 INVITE* |
| *Content-Type: applicationlsdp* |
| *Conient-Length: 150* |
| *P-Asserted-Identity: <sip:ITSE000102_B@home31.ims.integ>* |
| *P-Charging-Vector: icid-value="00030028@pcscf.home31.ims.integ"* |
| *Tracking: 128937469182sc1;monitor=ftp:*//*monitor.network.xyz;mode=full;msg-id=OK200*/*cscf1@home31.ims.integ*/*8* |

The listing as given in Table 2 is a second example for another scenario-traceful SIP message showing an excerpt and relating to the same scenario as the aforementioned first example.

A collection of tickets is done by collecting data ticket records locally in the network element and then sending them to the STCF by sub-addressing via the address of the STCF, i.e. a unique scenario tracking ID (e.g. via FtpPush mechanisms like typically used for offline charging ticket deliveries). Such a ticket comprises all messages received or sent, any important timers started or expired, any important tasks or state changes etc. which occur for a specific call scenario. This guarantees that any traceful data collected by a network element is directly conveyed to the right place to be monitored and post-processed.

When the STF detects that an initial message is part of a traceful scenario, it immediately starts to record any node-local important scenario tracking activity and data into so-called scenario-tracking tickets.

The scenario-tracking ticket contains
- a time stamp when the tracking (traceful) event occurred, (e.g. time of receiving/sending the message, time when a timeout was handled, etc.)
- the scenarioID
   - the tracking info type (message, timer, signal, internal event, state change, task etc.) with arbitrary useful information.
- incoming/outgoing raw messages including
   ∘ the message type (message, timer, signal, internal event, state change, task etc.),
   o the scenario message ID taken from the scenario-tracking header,
   o a payload or reasonable excerpts of it,
- information about (optional) parsed message serializations,
- information about (optional) internal timer activities,
- information about important application layer handling related to the scenario, and/or
- any other interesting network element specific information about the very scenario item or network element specific environment information.

A scenario tracking detection functionality of the STF must be implemented in any network element which shall be aware of scenario traceability. In the simplest way, it just needs to analyze whether the tracking header is contained in the incoming SIP message. According to the existence of the header, tracking shall be continued via forwarding and reusing the received tracking header. Optionally, a local statefulness is used for an easy re-establishing of the tracking even in the case that subsequent or related messages did not contain the tracking header any more.

If a scenario has been found to be scenario-traceful it stays being traceful until the explicit or implicit end of the scenario. Tracefulness of a scenario cannot be switched off, but ends at the natural end of a scenario (e.g. at the end of a session). However, it can implicitly be restricted by the tracking mode option parameter

Further, the STF comprising a scenario traceability propagation functionality. Dependent on the logical role, position and/or function, the STF (re-)inserts a tracing header or strips it; e.g. border network elements may want to strip SIP tracking headers when leaving the trusted network, or to block tracking headers when messages enter the trusted network border. In correlation to the tracking options (just this leg, full depth (all legs), trusted network only) the related messages being addressed to another network function or network element. It also adds for each new sent message a new unique scenario-tracking message ID into the tracking header as used for appropriate correlation of sent and received message pair.

In case tracking is activated for the actual traceful scenario, the STF creates one or more tracking tickets and fills them with meaningful information, accordingly, seen from the network element's point of view. So, the STF further comprises a scenario tracking functionality.

Example of a tracking ticket for an incoming traceful message is e.g.
- the timestamp when the message was received,
- the scenario-ID and message type and message ID, and
- the application specific message content.

Message types can be e.g. "message" ("in"/"out"), "timer" ("expire", "set", "stop"), "task", "state change", "creation of a dynamic prowess / thread" ("parallel", "unsynchronized"), and "stop of a process".

In the network at least one scenario tracking collection function (STCF) must be available which can receive tracking tickets. The STCF provides
- tracking ticket storage for a reasonable number of tracking scenarios,
- optional ticket preprocessing functionality,
- optional scenario presentation layer (on the fly update, or static) and monitoring functionality,...
- optional ticket post-processing functionality.

The tickets are transported via FtpPush from the network elements to the STCF. Tickets of one scenario are stored in one directory of the STCF. One ticket file can contain several ticket instances (from the same network element, but not necessarily from the same network element processing instance, which is further described in the "From" and "To" fields). Every ticket comprises a header and an optional body (similar to a SIP message). Start of a ticket is indicated by a key word, and the length or end of a ticket is described by the "Content-Length" header field.

The following example shows, how a scenario tracking ticket could look like:
*SSST-TICKET SSST*/*1.0*
   *Date: Thu, 31 May 2007 20:34:10.435 GMT*
   *Scenario-ID: 128937469182sc1*
   *Event-Type: Message*/*in*
   *From: server1.operator.com*
   *To: cscf-role5@server2.other-operator.com*
   *Message-ID: INVITE*/*cscf-rolel@server1.operator.com*/*24678*
   *Content-Type: message*/*sip*
   *Content-Length: 142*

### <The intercepted SIP message>

A Timer event could look like:
*SSST-TICKET SSST*/*1.0*
   *Date: Thu, 31 May 2007 20:34:10.448 GMT*
   *Scenario-ID: 128937469182sc1*
   *Event-Type: Timer*/*set*
   *From: cscfrolex*@*server1.operator.com*
   *Message-ID: TimerT1*
   *Timer-Duration: 0.5*
   *Content-Length: 0*
   wherein the definitions of the fields are as follows
   "Date": the timestamp in internet format.
   "Event-Type": Message/in |Message/out| State-Change| Action/basic| Timer/set| | Timer/stop| Timer/timeout.
   "From": string with the name of the instance (in case of Message/out, State-Change, Action/basic, Timer/set and Timer/stop), wherein a DNS (domain name server) name or IP (internet protocol) address is provided in case of Message/in only.
   "To": string with the name of the instance (in case of Message/in, Timer/timeout), wherein a DNS name or IP address is provided in case of Message/out only.
   "Scenario-ID": a string which uniquely identifies the tracked scenario this tracking ticket is related to.
   "Message-ID": a string which uniquely identifies the message within the scenario if it is a message, or a name of the event in other cases.
   "Timer-Duration": duration of the timer (in seconds).
   "Content-Type": message/SIP; missing, if no message is attached.
   "Content-Length": Length of the attached SIP message (0, if no message is attached).

The message body is separated from the header by an empty line, the empty line must be present even, if no body is present (Content-Length: 0).

The tracking delivers the tracking tickets via a newly to be defined "Tc" interface to STCF.

Finally, it should be noted that the above preferred descriptions are of preferred examples for implementing the present invention, but the scope of the present invention should not necessarily be limited by this description. The scope of the present invention is defined by the following claims.

## Claims

1. A method for scenario tracking in a network including a plurality of network elements, wherein a scenario is originated from just one initial message or signal and comprises many further subsequent messages and signals resulting from responding and/or forwarding the messages to other network elements or network functions, comprising the steps of
- creating scenario tracking data including at least a unique scenario tracking identity allocated to a predetermined scenario to be tracked,
- forwarding said scenario tracking data via a message from one of the network elements to at least one of the other network elements,
- wherein for said message an application-level protocol is used and said scenario tracking data are added to the protocol messages as a scenario tracking header of said protocol,
- detecting a tracking header in an incoming application-level protocol message, as a response to detecting the tracking header, recording at least one of relevant scenario-specific activities, executed functions and relevant messaging into scenario tracking tickets, wherein said scenario tracking tickets include at least a time stamp indicating when a tracking event has occurred, the scenario tracking identity, the message identity, and/or the type of said message, and
- forwarding the scenario tracking tickets to a scenario ticket collection function network element.

2. The method according to claim 1, wherein said scenario tracking data further include the address of a scenario ticket collection function network element which is provided to post-process and monitor results of a traced scenario.

3. The method according to claim 1 or 2, wherein said scenario tracking data further include at least one option parameter for influencing the way of tracking.

4. The method according to any one of the preceding claims, wherein said scenario tracking data further include the identity of said message.

5. The method according to any one of the preceding claims, wherein the network element which receives said message incorporates at least said information about said predetermined scenario into its own messages to be forwarded to at least one of the other network elements.

6. The method according to claim 5, wherein said network element incorporates at least part of said scenario tracking data into its message.

7. The method according to claim 6, wherein said application-level protocol is a SIP (session initiation protocol).

8. The method according to at least any one of claims 1 to 7, wherein said protocol is a DIAMETER protocol.

9. The method according to any one of the preceding claims, wherein the scenario ticket collection function network element is provided to post-process and monitor results of a traced scenario.

10. The method according to claim 2, wherein said scenario tracking tickets are forwarded to the addressed scenario ticket collection function network element.

11. The method according to any one of the preceding claims, wherein said scenario tracking tickets further include information about parsed message serialization, internal timer activities and/or application layer handling related to said scenario.

12. A network element for scenario tracking in a network including a plurality of network elements, wherein a scenario is originated from just one initial message or signal and comprises many further subsequent messages and signals resulting from responding and/or forwarding the messages to other network elements or network functions, comprising
a creator for creating scenario tracking data including at least a unique scenario tracking identity allocated to a predetermined scenario to be tracked,
a transmitter for forwarding said scenario tracking data via a message from one of the network elements to at least one of the other network elements,
wherein for said message an application-level protocol is used, and said scenario tracking data are added to the protocol messages as a scenario tracking header of said protocol,
a detector for detecting a tracking header in an incoming application-level protocol message,
a recorder for recording, as a response to detecting the tracking header, at least one of relevant scenario-specific activities, executed functions and relevant messaging into scenario tracking tickets, wherein said scenario tracking tickets include at least a time stamp indicating when a tracking event has occurred, the scenario tracking identity, the message identity, and/or the type of said message, and
a transmitter for forwarding the scenario tracking tickets to a scenario ticket collection function network element.

13. The network element according to claim 12, wherein said scenario tracking data further include the address of a scenario ticket collection function network element which is provided to post-process and monitor results of a traced scenario.

14. The network element according to claim 12 or 13, wherein said scenario tracking data further include at least one option parameter for influencing the way of tracking.

15. The network element according to any one of the claims 12 to 14, wherein said scenario tracking data further include the identity of said message.

16. The network element according to any one of the claims 12 to 15, further comprising an incorporator for incorporating upon receipt of said message at least said information about said predetermined scenario into a new message to be forwarded to at least one of the other network elements.

17. The network element according to claim 16, said incorporator is further adapted to incorporate at least part of said scenario tracking data into its message.

18. The network element according to any of claims 12 to 17, wherein said protocol is a SIP (session initiation protocol).

19. The network element according to any one of claims 12 to 17, wherein said protocol is a DIAMETER protocol.

20. The network element according to claim 13, wherein said transmitter is adapted to forward said scenario tracking tickets to the addressed scenario ticket collection function network element.

21. The network element according to any one of claims 12 to 20, wherein said scenario tracking tickets include at least a time stamp indicating when a tracking event has occurred, the scenario tracking identity, the message identity, and/or the type of said message.

22. The network element according to claim 21, wherein said scenario tracking tickets further include information about parsed message serialization, internal timer activities and/or application layer handling related to said scenario.

## Patentansprüche

1. Verfahren zur Szenarioverfolgung in einem Netz, das mehrere Netzelemente umfasst, wobei ein Szenario von nur einer Anfangsnachricht oder einem Anfangssignal stammt und viele weitere folgende Nachrichten und Signale umfasst, die aus dem Antworten und/oder dem Weiterleiten der Nachrichten an andere Netzelemente oder Netzfunktionen resultieren, wobei das Verfahren die folgenden Schritte umfasst:
- Erzeugen von Szenarioverfolgungsdaten, die zumindest eine eindeutige Szenarioverfolgungskennung enthalten, die einem vorgegebenen zu verfolgenden Szenario zugewiesen ist,
- Weiterleiten der Szenarioverfolgungsdaten über eine Nachricht von einem der Netzelemente an mindestens eines der anderen Netzelemente,
- wobei für die Nachricht ein Anwendungsebenenprotokoll verwendet wird und die Szenarioverfolgungsdaten als eine Szenarioverfolgungskopfzeile des Protokolls zu den Protokollnachrichten hinzugefügt werden,
- Detektieren einer Verfolgungskopfzeile in einer eingehenden Anwendungsebenenprotokoll-Nachricht,
- Aufzeichnen von relevanten für das Szenario spezifischen Aktivitäten, ausgeführten Funktionen und/oder relevanter Nachrichtenübermittlung in Szenarioverfolgungstickets, wobei die Szenarioverfolgungstickets zumindest einen Zeitstempel, der anzeigt, wann ein Verfolgungsereignis aufgetreten ist, die Szenarioverfolgungskennung, die Nachrichtenkennung und/oder den Nachrichtentyp enthalten, als eine Reaktion auf das Detektieren der Verfolgungskopfzeile, und
- Weiterleiten der Szenarioverfolgungstickets an ein Netzelement mit Szenarioticket-Sammelfunktion.

2. Verfahren nach Anspruch 1, wobei die Szenarioverfolgungsdaten ferner die Adresse eines Netzelements mit Szenarioticket-Sammelfunktion enthalten, das vorgesehen ist, um Ergebnisse eines verfolgten Szenarios nachzuverarbeiten und zu überprüfen.

3. Verfahren nach Anspruch 1 oder 2, wobei die Szenarioverfolgungsdaten ferner mindestens einen Wahlparameter zum Beeinflussen der Art des Verfolgens enthalten.

4. Verfahren nach einem der vorhergehenden Ansprüche, wobei die Szenarioverfolgungsdaten ferner die Kennung der Nachricht enthalten.

5. Verfahren nach einem der vorhergehenden Ansprüche, wobei das Netzelement, das die Nachricht empfängt, zumindest die Informationen über das vorgegebene Szenario in seine eigenen Nachrichten aufnimmt, die an mindestens eines der anderen Netzelemente weitergeleitet werden sollen.

6. Verfahren nach Anspruch 5, wobei das Netzelement zumindest einen Teil der Szenarioverfolgungsdaten in seine Nachricht aufnimmt.

7. Verfahren nach Anspruch 6, wobei das Anwendungsebenenprotokoll ein SIP (Session Initiation Protocol) ist.

8. Verfahren nach mindestens einem der Ansprüche 1 bis 7, wobei das Protokoll ein DIAMETER-Protokoll ist.

9. Verfahren nach einem der vorhergehenden Ansprüche, wobei das Netzelement mit Szenarioticket-Sammelfunktion vorgesehen ist, um Ergebnisse eines verfolgten Szenarios nachzuverarbeiten und zu überwachen.

10. Verfahren nach Anspruch 2, wobei die Szenarioverfolgungstickets an das adressierte Netzelement mit Szenarioticket-Sammelfunktion weitergeleitet werden.

11. Verfahren nach einem der vorhergehenden Ansprüche, wobei die Szenarioverfolgungstickets ferner Informationen über analysierte Nachrichtenserialisierung, Aktivitäten des internen Zeitgebers und/oder der Handhabung der Anwendungsebene bezüglich des Szenarios enthalten.

12. Netzelement zur Szenarioverfolgung in einem Netz, das mehrere Netzelemente umfasst, wobei ein Szenario von nur einer Anfangsnachricht oder einem Anfangssignal stammt und viele weitere folgende Nachrichten und Signale umfasst, die aus dem Antworten und/oder dem Weiterleiten der Nachrichten an andere Netzelemente oder Netzfunktionen resultieren, wobei das Netzelement Folgendes umfasst:
- einen Erzeuger zum Erzeugen von Szenarioverfolgungsdaten, die zumindest eine eindeutige Szenarioverfolgungskennung enthalten, die einem vorgegebenen zu verfolgenden Szenario zugewiesen ist,
- einen Sender zum Weiterleiten der Szenarioverfolgungsdaten über eine Nachricht von einem der Netzelemente an mindestens eines der anderen Netzelemente,
- wobei für die Nachricht ein Anwendungsebenenprotokoll verwendet wird und die Szenarioverfolgungsdaten den Protokollnachrichten als eine Szenarioverfolgungskopfzeile des Protokolls hinzugefügt werden,
- einen Detektor zum Detektieren einer Verfolgungskopfzeile in einer eingehenden Anwendungsebenenprotokoll-Nachricht,
- eine Aufzeichnungsvorrichtung zum Aufzeichnen von relevanten für das Szenario spezifischen Aktivitäten, ausgeführten Funktionen und/oder relevanter Nachrichtenübermittlung in Szenarioverfolgungstickets, wobei die Szenarioverfolgungstickets zumindest einen Zeitstempel, der anzeigt, wann ein Verfolgungsereignis aufgetreten ist, die Szenarioverfolgungskennung, die Nachrichtenkennung und/oder den Nachrichtentyp enthalten, als eine Reaktion auf das Detektieren der Verfolgungskopfzeile, und
- einen Sender zum Weiterleiten der Szenarioverfolgungstickets an ein Netzelement mit Szenarioticket-Sammelfunktion.

13. Netzelement nach Anspruch 12, wobei die Szenarioverfolgungsdaten ferner die Adresse eines Netzelements mit Szenarioticket-Sammelfunktion enthalten, das vorgesehen ist, um Ergebnisse eines verfolgten Szenarios nachzuverarbeiten und zu überprüfen.

14. Netzelement nach Anspruch 12 oder 13, wobei die Szenarioverfolgungsdaten ferner zumindest einen Wahlparameter zum Beeinflussen der Art des Verfolgens enthalten.

15. Netzelement nach einem der Ansprüche 12 bis 14, wobei die Szenarioverfolgungsdaten ferner die Kennung der Nachricht enthalten.

16. Netzelement nach einem der Ansprüche 12 bis 15, das ferner eine Aufnahmevorrichtung umfasst, um bei Empfang der Nachricht zumindest die Informationen über das vorgegebene Szenario in eine neue Nachricht aufzunehmen, die an mindestens eines der anderen Netzelemente weitergeleitet werden sollen.

17. Netzelement nach Anspruch 16, wobei die Aufnahmevorrichtung ferner dafür ausgelegt ist, zumindest einen Teil der Szenarioverfolgungsdaten in seine Nachricht aufzunehmen.

18. Netzelement nach einem der Ansprüche 12 bis 17, wobei das Anwendungsebenenprotokoll ein SIP (Session Initiation Protocol) ist.

19. Netzelement nach einem der Ansprüche 12 bis 17, wobei das Protokoll ein DIAMETER-Protokoll ist.

20. Netzelement nach Anspruch 13, wobei der Sender dafür ausgelegt ist, die Szenarioverfolgungstickets an das adressierte Netzelement mit Szenarioticket-Sammelfunktion weiterzuleiten.

21. Netzelement nach einem der Ansprüche 12 bis 20, wobei die Szenarioverfolgungstickets zumindest einen Zeitstempel, der anzeigt, wann ein Verfolgungsereignis aufgetreten ist, die Szenarioverfolgungskennung, die Nachrichtenkennung und/oder den Nachrichtentyp enthalten.

22. Netzelement nach Anspruch 21, wobei die Szenarioverfolgungstickets ferner Informationen über analysierte Nachrichtenserialisierung, Aktivitäten des internen Zeitgebers und/oder der Handhabung der Anwendungsebene bezüglich des Szenarios enthalten.

## Revendications

1. Un procédé de suivi de scénarios dans un réseau comprenant une pluralité d'éléments de réseau, dans lequel un scénario provient de seulement un message ou signal initial et comprend un grand nombre d'autres messages et signaux subséquents résultant de la réponse à et/ou de la transmission des messages à d'autres éléments de réseau ou fonctions de réseau, comprenant les étapes suivantes :
- la création de données de suivi de scénario contenant au moins une identité de suivi de scénario unique attribuée à un scénario prédéterminé à suivre,
- la transmission desdites données de suivi de scénario par l'intermédiaire d'un message à partir d'un des éléments de réseau vers au moins un des autres éléments de réseau,
- dans lequel, pour ledit message, un protocole de niveau application est utilisé et lesdites données de suivi de scénario sont ajoutées aux messages de protocole sous la forme d'un en-tête de suivi de scénario dudit protocole,
- la détection d'un en-tête de suivi dans un message de protocole de niveau application entrant en réponse à la détection de l'en-tête de suivi, l'enregistrement d'au moins un élément parmi des activités spécifiques à un scénario pertinent, des fonctions exécutées et des activités de messagerie pertinentes dans des tickets de suivi de scénario, lesdits tickets de suivi de scénario comprenant au moins un timbre à date indiquant le moment où un événement de suivi s'est produit, l'identité du suivi de scénario, l'identité de message et/ou le type dudit message, et
- la transmission des tickets de suivi de scénario à un élément de réseau de fonction de recueil de tickets de scénario.

2. Le procédé selon la revendication 1, dans lequel lesdites données de suivi de scénario comprennent en outre l'adresse d'un élément de réseau de fonction de recueil de tickets de scénario qui est fourni de façon à post-traiter et surveiller des résultats d'un scénario suivi.

3. Le procédé selon la revendication 1 ou 2, dans lequel lesdites données de suivi de scénario comprennent en outre au moins un paramètre d'option destiné à influencer la manière d'effectuer le suivi.

4. Le procédé selon l'une quelconque des revendications précédentes, dans lequel lesdites données de suivi de scénario comprennent en outre l'identité dudit message.

5. Le procédé selon l'une quelconque des revendications précédentes, dans lequel l'élément de réseau qui reçoit ledit message incorpore au moins lesdites informations relatives audit scénario prédéterminé dans ses propres messages à transmettre à au moins un des autres éléments de réseau.

6. Le procédé selon la revendication 5, dans lequel ledit élément de réseau incorpore au moins une partie desdites données de suivi de scénario dans son message.

7. Le procédé selon la revendication 6, dans lequel ledit protocole de niveau application est un protocole SIP (protocole d'ouverture de session).

8. Le procédé selon l'une quelconque des Revendications 1 à 7, dans lequel ledit protocole est un protocole DIAMETER.

9. Le procédé selon l'une quelconque des revendications précédentes, dans lequel l'élément de réseau de fonction de recueil de tickets de scénario est fourni de façon à post-traiter et surveiller des résultats d'un scénario suivi.

10. Le procédé selon la revendication 2, dans lequel lesdits tickets de suivi de scénario sont transmis à l'élément de réseau de fonction de recueil de tickets de scénario adressé.

11. Le procédé selon l'une quelconque des revendications précédentes, dans lequel lesdits tickets de suivi de scénario comprennent en outre des informations relatives à une sérialisation de messages analysés, à des activités d'horloge interne et/ou à une gestion de couche d'application liées audit scénario.

12. Un élément de réseau de suivi de scénarios dans un réseau comprenant une pluralité d'éléments de réseau, dans lequel un scénario provient de seulement un message ou signal initial et comprend un grand nombre d'autres messages et signaux subséquents résultant de la réponse à et/ou de la transmission des messages à d'autres éléments de réseau ou fonctions de réseau, comprenant
un créateur destiné à la création de données de suivi de scénario comprenant au moins une identité de suivi de scénario unique attribuée à un scénario prédéterminé à suivre,
un transmetteur destiné à transmettre lesdites données de suivi de scénario par l'intermédiaire d'un message d'un des éléments de réseau à au moins un des autres éléments de réseau,
dans lequel, pour ledit message un protocole de niveau application est utilisé, et lesdites données de suivi de scénario sont ajoutées aux messages de protocole sous la forme d'un en-tête de suivi de scénario dudit protocole,
un détecteur destiné à la détection d'un en-tête de suivi dans un message de protocole de niveau application entrant,
un enregistreur destiné à l'enregistrement, en réponse à la détection de l'en-tête de suivi, d'au moins un élément parmi des activités spécifiques à un scénario pertinent, des fonctions exécutées et des activités de messagerie pertinentes dans des tickets de suivi de scénario, lesdits tickets de suivi de scénario comprenant au moins un timbre à date indiquant le moment où un événement de suivi s'est produit, l'identité du suivi de scénario, l'identité de message et/ou le type dudit message, et
un transmetteur destiné à transmettre les tickets de suivi de scénario à un élément de réseau de fonction de recueil de tickets de scénario.

13. L'élément de réseau selon la revendication 12, dans lequel lesdites données de suivi de scénario comprennent en outre l'adresse d'un élément de réseau de fonction de recueil de tickets de scénario qui est fourni de façon à post-traiter et surveiller des résultats d'un scénario suivi.

14. L'élément de réseau selon la revendication 12 ou 13, dans lequel lesdites données de suivi de scénario comprennent en outre au moins un paramètre d'option destiné à influencer la manière d'effectuer le suivi.

15. L'élément de réseau selon l'une quelconque des revendications 12 à 14, dans lequel lesdites données de suivi de scénario comprennent en outre l'identité dudit message.

16. L'élément de réseau selon l'une quelconque des revendications 12 à 15, comprenant en outre un incorporateur destiné à l'incorporation, lors de la réception dudit message, d'au moins lesdites informations relatives audit scénario prédéterminé dans un nouveau message à transmettre à au moins un des autres éléments de réseau.

17. L'élément de réseau selon la revendication 16, ledit incorporateur étant adapté en outre de façon à incorporer au moins une partie desdites données de suivi de scénario dans son message.

18. L'élément de réseau selon l'une quelconque des revendications 12 à 17, dans lequel ledit protocole est un protocole SIP (protocole d'ouverture de session).

19. L'élément de réseau selon l'une quelconque des revendications 12 à 17, dans lequel ledit protocole est un protocole DIAMETER.

20. L'élément de réseau selon la revendication 13, dans lequel ledit transmetteur est adapté de façon à transmettre lesdits tickets de suivi de scénario à l'élément de réseau de fonction de recueil de tickets de scénario adressé.

21. L'élément de réseau selon l'une quelconque des revendications 12 à 20, dans lequel lesdits tickets de suivi de scénario comprennent au moins un timbre à date indiquant le moment où un événement de suivi s'est produit, l'identité du suivi de scénario, l'identité de message et/ou le type dudit message.

22. L'élément de réseau selon la revendication 21, dans lequel lesdits tickets de suivi de scénario comprennent en outre des informations relatives à une sérialisation de messages analysés, à des activités d'horloge interne et/ou à une gestion de couche d'application liées audit scénario.
